(19) **Europäisches Patentamt**
**European Patent Office**
**Office européen des brevets**

(11) **EP 1 769 465 B1**

(12) **EUROPEAN PATENT SPECIFICATION**

(45) Date of publication and mention
of the grant of the patent:
**24.10.2012 Bulletin 2012/43**

(51) Int Cl.:
***G07C 5/08*** *(2006.01)*     ***G11B 17/22*** *(2006.01)*

(21) Application number: **05755918.9**

(22) Date of filing: **31.05.2005**

(86) International application number:
**PCT/US2005/018899**

(87) International publication number:
**WO 2005/119600 (15.12.2005 Gazette 2005/50)**

(54) **TIMELINE RANDOM ACCESS FOR MULTI-FORMAT TIME-BASED FILE RECORDING AND PLAYBACK**

ZEITLINIEN-ZUFALLSZUGANG FÜR MEHRFORMATIGES, AUF ZEIT BASIERENDES AUFZEICHNEN UND WIEDERGEBEN VON DATEIEN

ACCES ALEATOIRE DE LIGNE TEMPORELLE POUR UN ENREGISTREMENT ET UNE LECTURE DE FICHIERS MULTIFORMAT BASES SUR LE TEMPS

(84) Designated Contracting States:
**AT BE BG CH CY CZ DE DK EE ES FI FR GB GR HU IE IS IT LI LT LU MC NL PL PT RO SE SI SK TR**

(30) Priority: **01.06.2004 US 575490 P**
**12.01.2005 US 34511**

(43) Date of publication of application:
**04.04.2007 Bulletin 2007/14**

(73) Proprietor: **GE Aviation Systems LLC**
**Grand Rapids, MI 49512-1991 (US)**

(72) Inventor: **DABROWSKI, Stephen**
**Kentwood, MI 49508 (US)**

(74) Representative: **Williams, Andrew Richard**
**Global Patent Operation-Europe**
**GE International Inc**
**15 John Adam Street**
**London WC2N 6LU (GB)**

(56) References cited:
| | |
|---|---|
| **GB-A- 2 127 656** | **US-A- 3 946 364** |
| **US-A1- 2002 004 695** | **US-A1- 2004 008 253** |
| **US-B1- 6 366 311** | **US-B1- 6 393 347** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates generally to recording and playback of data, and in particular, to the recording and playback of aircraft data.

Recording and playback of aircraft data is important for many purposes, such as for determining the operational state of an aircraft, or for determining the cause of an aircraft accident.

The ARINC standard is utilized for aircraft data acquisition and playback. Conventional personal computer interface cards, such as conventional ARINC 429 interface cards, provide software that allows recording and playback of avionics data, whereby that data cannot be recorded or played back in a random access manner. This leads to difficulty in reviewing aircraft data in real time or at a later point in time.

US 6,366, 311 B1 discloses a multi-media recording and playback system for an aircraft where both multiple data and video images can be collected, monitored, transmitted, stored and played back to help reconstruct events and provide a record of the condition of the aircraft during its flight. This document discloses the multiplexing and sequencing of multiple data sources using split-screen technology. However, although data storage and playback is done with respect to a timeline and the document discloses a time signal being incorporated into each data scheme, the lack of a common timeline independent of the particular format of each of the respective data sources would lead to problems in playback of multiple data sources in real time.

SUMMARY OF THE INVENTION

One aspect of the invention provides a random access recording method for recording and playback of avionics data, the method being according to claim 1. A second aspect of the invention provides a system for recording and playing back of avionics data, the system being according to claim 9. A third aspect of the invention provides a computer readable memory having a data structure implementation capacity for recording and playing back of avionics data, the memory being according to claim 15.

Other features and advantages of the present invention will become apparent to those skilled in the art from the following detailed description and accompanying drawings. It should be understood, however, that the detailed description and specific examples, while indicating preferred embodiments of the present invention, are given by way of illustration and not limitation.

BRIEF DESCRIPTION OF THE DRAWINGS

The exemplary embodiments will hereafter be described with reference to the accompanying drawings, wherein like numerals depict like elements, and:

Figure 1 is a diagram showing a data file structure according to an embodiment of the invention;

Figure 2 is a diagram showing a timeline pointer that can be adjusted by a user, according to an embodiment of the invention;

Figure 3 is a flow chart showing a data recording process, according to an embodiment of the invention;

Figure 4 is a flow chart showing a random access playback process, according to an embodiment of the invention;

Figure 5 is a block diagram showing a data acquisition system according to an embodiment of the invention; and

Figure 6 is a block diagram showing a data playback system according to an embodiment of the invention.

DETAILED DESCRIPTION OF THE PREFERRED EMBODIMENTS

In the following description, for the purposes of explanation, numerous specific details are set forth in order to provide a thorough understanding of the present invention. It will be evident to one skilled in the art, however, that the exemplary embodiments may be practiced without these specific details. In other instances, structures and device are shown in diagram form in order to facilitate description of the exemplary embodiments.

Computer graphical user interface (GUI) timelines are ubiquitous for accessing video or audio computer files. The present invention utilizes a single uniform timeline referenced data file to access multiple non-uniform data file pointers, thereby allowing random navigation of multiple avionics data files. Because these individual data files can have any format or structure, the present invention can be used to provide synchronization and access of dissimilar data formats.

Because there is no need to track the contents of individual data files, the use of a single pointer file in accordance with a first embodiment of the invention provides a uniform method of queuing data for playback either in real time or near real time, or at a later time for analysis purposes. The first embodiment will be described for use with ARINC 429 avionics bus traffic, but one skilled in the art will recognize that the first embodiment can be utilized with other types of data, such as video, audio, or other avionics formats (e.g., AFDX, 1553, 1394).

Conventional avionics data recording and playback systems use the known format of the data files to parse the data during playback. The first embodiment of the present invention does not depend on the particular format of the data files, and whereby it also allows re-synchronization and random access of multiple formats without regard to file contents.

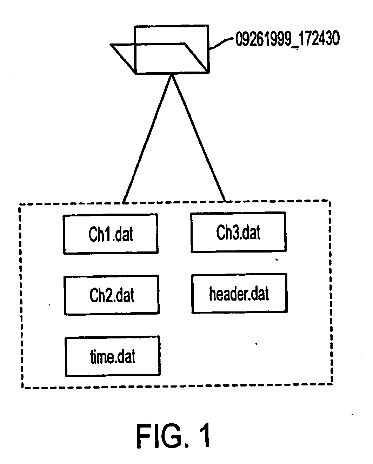

A first embodiment of the invention will be described with reference to Figure 1, which shows a directory structure. The main file folder is identified by date and time; for example, in Figure 1, the main file folder is for September 26, 1999, at 1700 hours, 24 minutes and 30 seconds. That time may correspond to the beginning of storage of data from an aircraft for a particular flight, for example. Within the main file folder are several data files. One data file is a header file, header.dat, which contains database format information that is used to convert data messages of a particular format (e.g., ARINC 429 format) into engineering values. The main file folder also includes a file for each of a plurality of channels that respectively provide data from a particular component of an aircraft. In Figure 1, there are sixteen (16) data channels, and thus there are at most 16 channel files (ch1.dat, ch2.dat, ch3.dat, etc.) in the main file folder. Each of these 16 channel files contains an ARINC message data stream for its particular data channel. Lastly, the main file folder contains a timeline file, time.dat, which contains a time-based index into the channel files.

The fundamental operation of a loss-free SBS ARINC data collection is based on an Interrupt Service Routine and an SBS Channel Sequencing Monitoring function. The SBS interface card has at least two sequential monitor buffers for each channel. As each message is received by the SBS interface card, that message is placed in one of the two buffers, along with a time tag. In a preferred implementation of the first embodiment, each message is a 32-bit ARINC 429 message, and each time tag is a 48-bit time tag. One of ordinary skill in the art will recognize that different size messages and time tags may be envisioned while remaining within the scope of the present invention.

When the buffer receiving the data is filled up with data, the SBS interface card automatically swaps the data in that buffer with the other buffer of the SBS interface card, and a service request action is triggered based on this event. A host computer service routine monitors for such events, and extracts the data from SBS interface card, and writes the data into the appropriate channel's data file (e.g., ch3.dat).

The size of the sequential monitor buffer creates a "write block unit" that includes a fixed number of words per message. In the preferred implementation of the first embodiment, a write block unit corresponds to five 16-bit words per message. Of course, one of ordinary skill in the art will recognize that other sizes for the write block unit may be contemplated while remaining within the scope of the present invention.

The time-aligned messages do not need to be in any particular label order, and there is no restriction that labels will not repeat or be missing entirely from a given "write block unit." In other words, there is no special meaning to a write block unit other than each time a channel interrupt occurs, the data file will be updated with an amount of data corresponding to a write block unit.

In the first embodiment, data from the 16 channels are respectively kept in separate data files, in order to simplify the data extraction process and to reduce the file overhead when replaying the data files. Only the channels that need decoding are opened and read during a playback session, based on the user's intent (e.g., the user's desire to only review the data from channels 5 and 8). The channel independence of these separate data files allows many channels of widely different data fill rates to be handled within a single time index. Data is written as it is received, and individual message time-lags allow complete event reconstruction of separate channels on a common timeline. Thus, a user may wish to reconstruct an event by reviewing the data from channels 1, 8 and 16 during a particular one hour period in the middle of an eight-hour flight of an aircraft, whereby this can be done relatively simply utilizing the system and method according to the first embodiment.

In a preferred implementation of the first embodiment, the sequential monitor buffer size on the SBS interface card is given by 9 + 8 times the number of messages per buffer, whereby this value is changeable based on the particular system being configured. This value is specified when the SBS 429 interface card is initialized. It is preferred that a common value for this buffer be used for all channels to simplify code overhead. On the file storage side of the process, the write block unit in the data file is given by five times the number of messages per buffer, in the preferred implementation of the first embodiment.

The timeline file is an important aspect of the present invention, whereby it provides for the capability of random access to the data set. While data collection is underway, each channel's sequential monitor swap operation also updates that channel's file index, which, in a preferred implementation of the first embodiment, is a 64-bit file index. During data collection, the timeline file is updated periodically by writing the entire set of these individual channel's 64-bit file pointer indices. By way of example and not by way of limitation, the periodic updating is performed once per second. For each timeline increment, there will be sixteen 64-bit integers written into the timeline file in the preferred implementation of the first embodiment.

To access any random portion of a data set, the following steps are utilized: a) determine time offset from the beginning of a data collection session, b) divide that offset by the timeline file's period to find the index into the timeline file, c) open the timeline file and fseek to the timeline file record corresponding to the desired offset, d) read the sixteen 64-bit file indices from the timeline file, e) open the desired channel file and fseek to the individual "write block unit" record within that file, and f) begin reading the data sequentially from that point.

Additional processing steps are used to reconstruct the entire time history of the individual channels: a) for each channel of data, read and store the time-tag of the first message, b) time sort through all channel time-tags to find the earliest message, c) submit the earliest message to its associated data processing activity, d) read the next message from that earliest channel's data file, and e) repeat the "time sort" process until the end of all files or a specified upper time limit is reached.

The following provides exemplary file storage requirements for implementing the first embodiment of the present invention. Each ARINC 429 channel produces ten 8-bit bytes per message. A high-speed channel's highest data rate is 100,000 bits per second, with a minimum of 36 bits per message. The pertinent calculations are thus:

$$100,000 \text{ bits/sec} * 1 \text{ message/36 bits} = 2778 \text{ messages/sec}$$

$$2778 \text{ messages/sec} * 10 \text{ bytes/message} = 27,778 \text{ bytes/sec}$$

Thus, a high-speed data channel consumes :

$$27,778 \text{ bytes/sec} * 3600 \text{ sec/hr} * 1 \text{ Mbyte/1024*1024 bytes}$$
$$= 95.367 \text{ Mb/hour} .$$

While a low-speed channel, one-eighth of the high-speed rate, consumes:

$$95.367 \text{ Mb/hr} * 12500 \text{ bps/100,000 bps} = 11.921 \text{ Mb/hour}$$

For a single channel, at the highest theoretical message rate, the disk would fill at the maximum rate of:

$$1024 \text{ Mb/Gb} * \text{hr/95.367 Mb} = 10.737 \text{ hours/Gb}$$

In general, for "x" low-speed and "y" high speed channels, the maximum theoretical fill rate becomes:

$$1024 \text{ Mb/Gb} * (\text{hr/}((y*95.367) + (x*11.921)\text{Mb}) (\text{hr/Gb})$$

For 8 low-speed and 8 high-speed channels, the estimated record time becomes:

$$1024 \text{ Mb/Gb} * (\text{hr/}((8*95.367) + (8*11.921)\text{Mb})$$
$$= 1.193 \text{ hours/Gb}$$

The computation values provided above are very conservative, whereby the 2778 message per second rate works out to just under three (3) messages per millisecond, which is far greater than a typical bus loading. A high-speed EFIS bus produces approximately 64 messages every 50 milliseconds, which is about 3½ times slower than the theoretical limit. Using that estimate across all channels results in a data storage rate of about four (4) hours per gigabyte for the 8 high-speed and 8 low-speed example, which is reasonable for current storage capabilities of computer disk drives.

Along with the data file storage, the timeline file, which is defined in the preferred implementation of the first embodiment to accommodate 16 channels, would grow at a rate of:

$$16 \text{ channels} * 8 \text{ bytes}/(\text{channel} - \text{time increment}) *$$

$$(1 \text{ time} - \text{increment}/ X \text{ seconds}) * 3600 \text{ seconds} / \text{hr}$$

$$= 460800 \text{ bytes} / X \text{ hours}$$

where "X" is the granularity of the timeline in seconds. If it is assumed that a one (1) second timeline is desired, then the fixed overhead to maintain random file access becomes:

$$460800 \text{ bytes}/(1) \text{ hours} * 1 \text{ Mb}/(1024 * 1024 \text{ bytes})$$

$$= 0.439 \text{ Mb/hour}$$

This value is relatively small in comparison to the data file fill rate, and is therefore not a major factor in storage requirements calculations.

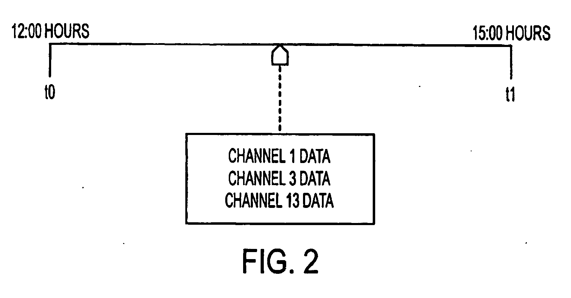

It is envisioned that, in one possible implementation of the first embodiment, a user is provided with a GUI display, whereby the user can move a time line cursor to a particular moment in time, in order to playback data that was recorded for a particular flight of an aircraft. In Figure 2, a timeline start position t0 corresponds to the start of flight, and a timeline end position t1 corresponds to the end of the flight. In this example, the flight was three hours long, whereby the user can move a cursor to obtain avionics information obtained during any particular portion of that flight, similar to how a user can play back an audio file using a Real Time Media™ player to play back an audio music file obtained from the Internet. When positioned at any particular location on the timeline, the user will be provided information (such as via a pop-up menu on the GUI display) as the particular channels that are providing data (which is being stored in respective channel files) at that moment in time. For example, for time instant corresponding to where the pointer is positioned in Figure 2, the pop-up menu indicates that data was received (or is being received, for a real-time application) from data channels 1, 3 and 13, and whereby data from one or more of those channels can be monitored by the user by way of the GUI display.

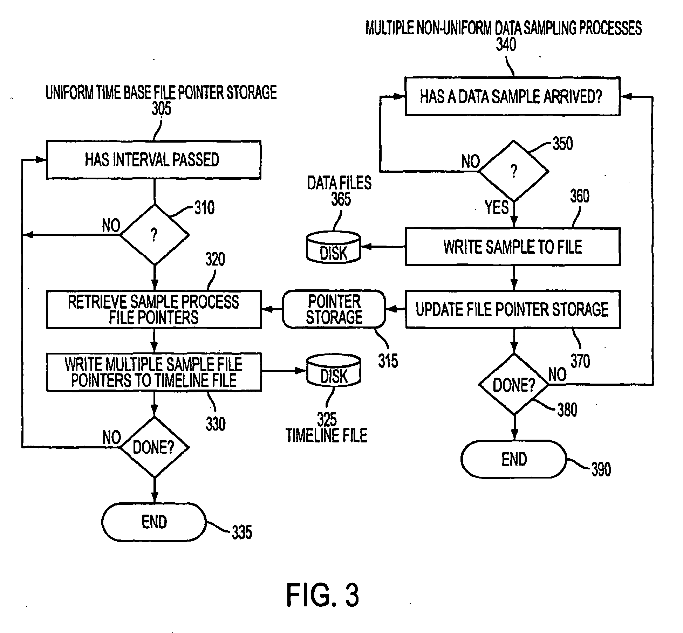

Figure 3 is a flow chart showing a random access recording process in accordance with a first embodiment of the invention. With respect to a non-uniform data sampling process in accordance with the first embodiment, in step 350, it is determined whether or not a data sample has arrived. If No, the process returns to step 340. If Yes, the process goes to step 360, to write the sample to the appropriate data file, whereby the data file is stored in a memory 365. In step 370, the file pointer storage 315 is updated. In step 380, a determination is made as to whether or not the data sampling is complete for the particular sample being recorded. If No (Not Done), the process returns to step 340, to await the next data sample. If Yes (Done), the process ends in step 390.

With respect to the Uniform Time Base File Pointer Storage in accordance with the first embodiment of the invention, in step 310, it is determined whether or not a predetermined time interval (e.g., 1 second) has passed. If No, the process returns to step 305. If Yes, in step 320, sample process file pointers are retrieved from the file pointer storage 315. In step 330, multiple sample file pointers are written into the timeline file, based on information obtained from a timeline file stored in a data storage 325. When all of the file pointers are written to the timeline file for that particular interval (Done = Yes), the process ends in step 335; otherwise (Done = No), the process returns to step 305.

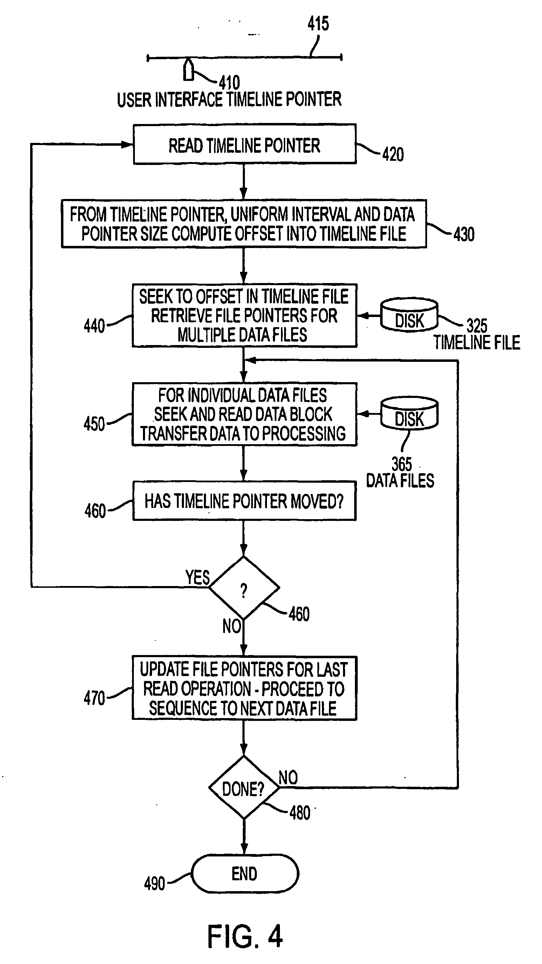

Figure 4 is a flow chart showing a random access playback process in accordance with a first embodiment of the invention. At the top of Figure 4 is shown a user interface time pointer 410, which the user can access by way of a GUI screen (see also Figure 2), in order to playback a particular data file or data files from a particular portion of a flight (via movement of the pointer 410 on the time line 415), in a random access manner. In step 420, a timeline pointer is read based on the current position of the timeline pointer on the GUI screen. From the timeline pointer, in step 430, and based on the uniform interval and data pointer size, there is computed an offset into the timeline file. In step 440, based on the offset computed for the timeline file, file pointers for one or more data files are retrieved from the timeline file (which is accessed from its storage location on disk 325). In step 450, for each individual data file, there is performed a process of seek (fseek) and read data blocks for these data files, and that data is transferred for processing. The data files are accessed from their storage locations in memory 365. In step 460, it is determined if the timeline pointer has moved. If No, the process continues to step 470, whereby the file pointers are updated for the last read operation, and whereby it proceeds to sequence to the next data file. If Yes, the process returns to step 420, to read the current timeline pointer. In step 480, it is determined if the playback process is complete. If No, the process returns to step 450 to read the next data file, and if Yes, the process ends in step 490.

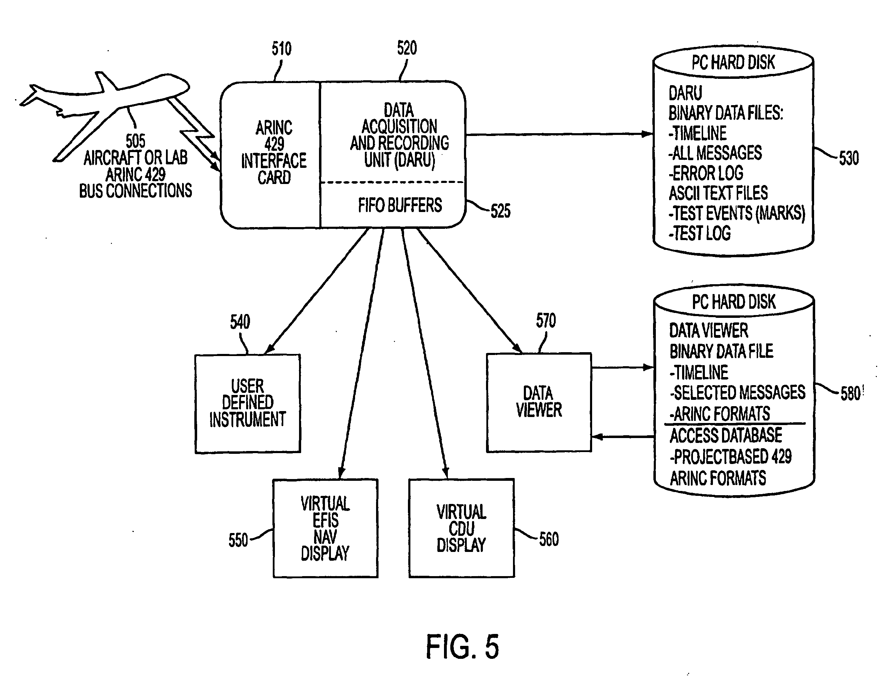

Figure 5 is a diagram showing a data acquisition recording system in accordance with a second embodiment of the invention. In Figure 5, aircraft data is obtained from various components of an aircraft 505 by way of ARINC 429 interface cards 510. Each interface card 510 communicates with a data acquisition and recording unit 520 that includes buffers 525. The data acquisition and recording unit 520 provides for random access storage of aircraft data from a plurality of data channels, such as described above with respect to the first embodiment. The data acquisition and recording unit 520 is preferably implemented as a software application that resides on a PC hard disk 530. The PC hard disk 530 also stores binary data files, whereby each data file can be accessed from timeline information, and whereby messages and error logs are also stored on the PC hard disk 530. Furthermore, test breaks (marks) and test logs are preferably stored on the PC hard disk 530. The buffers 525 provide for data to be sent to one of a plurality of data outputs, including a User Defined Instrument 540, a Virtual EFIS Navigation Display 550, a Virtual CDU Display 560, and a Data Viewer 570. Thus, a user can review the avionics data to be provided in a particular format to suit the user. The Data Viewer 570 is preferably a software application that is stored on a PC hard disk 580, and whereby the Data Viewer 570 allows the user to view the data files in a timeline, random access manner, as described above with respect to the first embodiment. The PC hard disk 580 also stores binary data files, including timelines data, selected messages, and various ARINC formats. Also, an ACCESS database is preferably stored on the PC hard disk 580, along with various ARINC formats.

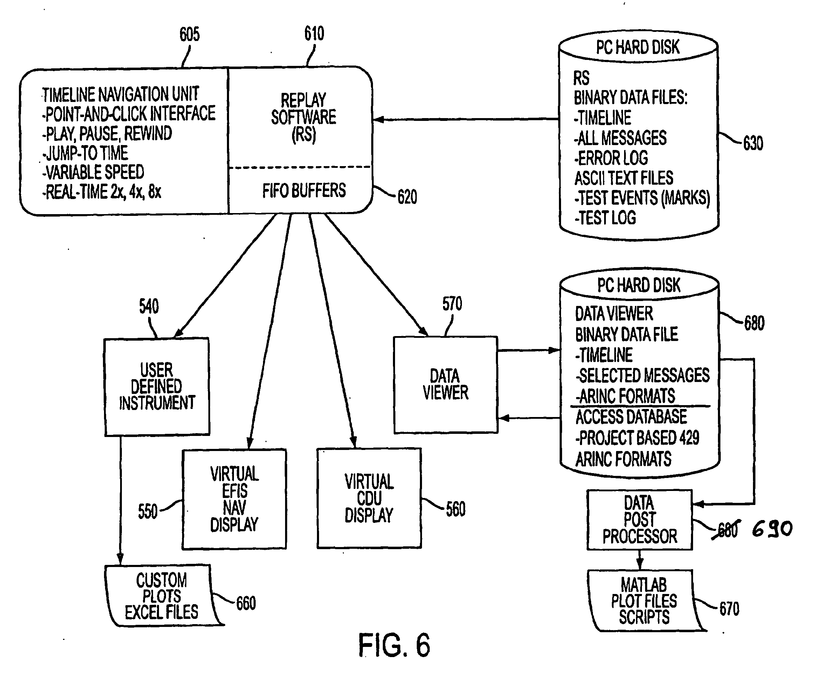

Figure 6 is a diagram showing a data acquisition playback system in accordance with a third embodiment of the invention. In Figure 6, a timeline navigation unit 605 allows for avionics data to played back using a point-and-click interface (e.g., a computer mouse). The timeline navigation unit 605 is preferably implemented as a software application, referred to in Figure 6 as "Replay Software" 610. The data can be paused or rewound to suit the user, by the user moving the timeline icon on a GUI display. Further, the user can jump to a particular point in time on an aircraft's flight, again by moving the timeline icon to a particular location on the GUI display. The data can be played in real-time, or at a faster rate, such as 2x, 4x, or 8x, in one possible implementation of the third embodiment. The same types of data output displays as shown in Figure 5 are included in the playback system of Figure 6, whereby there is also provided a capability for custom plots 660 (e.g., EXCEL plots), and Matlab plot files (scripts) 670 that receive the processed random access avionics data from a data post processor 690, which interface with Replay Software Application 610 via First In First Out (FIFO) Buffers 620. The Replay Software application 610 is preferably stored in a PC Hard Disk 630, whereby the PC Hard Disk 630 also stores binary data files (timeline, all messages, error logs) and ASCII text files (test events and test logs). A PC Hard Disk 680 stores a software application corresponding to the Data Viewer 570, whereby the PC Hard Disk 680 also stores binary data files (timeline, selected messages, ARINC formats), an Access Database, and ARINC formats.

Many other changes and modifications may be made to the present invention. The scope of these and other changes will become apparent from the appended claims. For example, the elements described with regards to the embodiments of the present invention may be implemented in software being run on a general purpose computer or by a special purpose computer, and/or by application specific integrated circuits (ASICs) or field programmable gate arrays (FPGAs), or a combination thereof.

**Claims**

1. A random access recording method for recording and playing back of avionics data, comprising:

   a) storing data received from a plurality of data channels in respective data files of dissimilar data formats;
   b) storing timeline pointers in a single separate timeline referenced pointer file, the timeline pointers signifying when the data from the respective plurality of data files was stored, the single separate timeline referenced pointer file thereby providing a time-based index for the plurality of data channels;
   c) determining a particular position of a timeline icon provided on a graphical user interface (GUI) display, the timeline icon signifying a point in time that a user desires to review avionics data stored in step a); and
   d) accessing and playing back data stored based on the particular position of the timeline icon with respect to corresponding values of the timeline pointers stored in step b), whereby the single separate timeline referenced pointer file permits random access of the plurality of data channels with respect to a common timeline independent of the particular format of the respective data files.

2. The method according to claim 1, wherein the data is provided in accordance with ARINC 429 standard.

3. The method according to claim 1, further comprising:

   prior to step c),
   receiving input, from the user, of a movement of the timeline icon on the GUI display.

EP 1 769 465 B1

4. The method according to claim 1, wherein step a) further comprises:

   a1) inputting data from a plurality of data channels; and
   a2) storing the respective data from the plurality of data channels in respective data files of dissimilar data formats.

5. The method according to claim 4, wherein the respective data files are stored in a file folder that includes date and time information for accessing the file folder.

6. The method according to claim 4, where step b) comprises:

   b1) storing the timeline pointers in a single separate timeline referenced pointer file, wherein the respective data files and the single separate timeline referenced pointer file are stored in a file folder that includes date and time information for accessing the file folder.

7. The method according to claim 6, wherein step d) comprises:

   d1) determining a time offset from a beginning of a data collection session;
   d2) dividing the time offset by a timeline offset file period to find an index to a single separate timeline referenced pointer file stored in a memory; and
   d3) opening the single separate timeline referenced pointer file and searching for a timeline record corresponding to the time offset; and
   d4) reading respective time-tag indices from the single separate timeline referenced pointer file based on the timeline record; and
   d5) opening each respective channel file and searching for data blocks stored therewithin; and
   d6) sequentially reading out data from each respective channel file that has data, starting at a point of time corresponding to the time-tag indices.

8. The method according to claim 1, wherein step a) comprises:

   a1) receiving a data sample from at least one data channel of a plurality of data channels;
   a2) writing the data sample to a corresponding data file stored in a file folder;
   a3) updating a file pointer in a single separate timeline referenced pointer file stored in the file folder, the single separate timeline referenced pointer indicating a point of time at which the corresponding data sample was received.

9. A system for recording and playing back of avionics data, comprising:

   a storing unit configured to store data received from a plurality of data channels in respective data files of dissimilar data formats the storing unit also configured to store timeline pointers in a single separate timeline referenced pointer file, the timeline pointers signifying when the data from the respective plurality of data files was stored, the single separate timeline referenced pointer file thereby providing a time-based index for the plurality of data channels;
   a determining unit configured to determine a particular position of a timeline icon provided on a graphical user interface (GUI) display, the timeline icon signifying a point in time that a user desires to review avionics data stored in the storing unit; and
   a playback unit configured to access and play back data stored based on the particular position of the timeline icon with respect to corresponding values of the timeline pointers stored in the storing unit, whereby the single separate timeline referenced pointer file permits random access to the plurality of data channels with respect to a common timeline independent of the particular format of the respective data files.

10. The system according to claim 9, wherein the data is provided in accordance with ARINC 429 standard.

11. The system according to claim 9, further comprising:

   an input unit configured to input data that represents a movement of the timeline icon on the GUI display by the user.

12. The system according to claim 9, wherein the storing unit is configured to receive data from a plurality of data

7

channels, and
wherein the storing unit is configured to store the respective data from the plurality of data channels in respective data files of dissimilar data formats.

13. The system according to claim 12, further comprising a file directory that includes at least one file folder, wherein the respective data files are stored in the at least one file folder that includes date and time information for accessing the file folder.

14. The system according to claim 13, wherein the file directory further comprises:

a single separate time line referenced pointer file configured to store the timeline pointers,
wherein the respective data files and the single separate timeline referenced pointer file are stored in the at least one file folder.

15. A computer readable memory having a data structure implementation capacity for recording and playing back of avionics data, comprising:

means for storing data received from a plurality of data channels in respective data files of dissimilar data formats;
means for storing timeline pointers in a single separate timeline referenced pointer file, the timeline pointers signifying when the data from the respective plurality of data files was stored, the single separate timeline referenced pointer file thereby providing a time-based index for the plurality of data channels;
means for determining a particular position of a timeline icon provided on a graphical user interface (GUI) display, the timeline icon signifying a point in time that a user desires to review avionics data stored by the data storing means; and
means for accessing and playing back data stored based on the particular position of the timeline icon with respect to corresponding values of the timeline pointers stored by the timeline pointers storing means, whereby the single separate timeline referenced pointer file permits random access of the plurality of data channels with respect to a common timeline independent of the particular format of the respective data files.

16. The computer readable memory according to claim 15, wherein the data is provided in accordance with ARINC 429 standard.

17. The computer readable memory according to claim 15, further comprising:

means for receiving input, from the user, of a movement of the timeline icon on the GUI display.

18. The computer readable memory according to claim 15, wherein the data storing means further comprises:

means for inputting data from a plurality of data channels; and
means for storing the respective data from the plurality of data
channels in respective data files of dissimilar data formats.

19. The computer readable memory according to claim 18, wherein the respective data files of dissimilar data formats are stored in a file folder that includes date and time information for accessing the file folder.

20. The computer readable memory according to claim 18, where the timeline pointers storing means comprises:

means for storing the timeline pointers in a single separate timeline referenced pointer file,
wherein the respective data files and the single separate timeline referenced pointer file are stored in a file folder that includes date and time information for accessing the file folder.

**Patentansprüche**

1. Zufallszugriff-Aufzeichnungsverfahren zum Aufzeichnen und Wiedergeben von Avionikdaten, mit den Schritten:

a) Speichern von aus mehreren Datenkanälen empfangenen Daten in entsprechenden Datendateien mit unterschiedlichen Datenformaten;

b) Speichern von Zeitlinienzeigern in nur einer getrennten Zeitlinienbezugszeigerdatei, wobei die Zeitlinienzeiger anzeigen, wann die Daten aus den entsprechenden mehreren Datendateien gespeichert wurden, wobei die nur eine getrennte Zeitlinienbezugszeigerdatei dadurch einen zeitbasierenden Index für die mehreren Datenkanäle bereitstellt;

c) Bestimmen einer speziellen Position eines auf einer grafischen Benutzerschnittstellen-(GUI)-Anzeigeeinrichtung bereitgestellten Zeitlinien-Icons, wobei das Zeitlinien-Icon einen Zeitpunkt anzeigt, an dem ein Benutzer im Schritt a) gespeicherte Avionikdaten betrachten möchte; und

d) Zugreifen auf und Wiedergeben von gespeicherten Daten auf der Basis der speziellen Position des Zeitlinien-Icons in Bezug auf entsprechende Werte der in dem Schritt b) gespeicherten Zeitlinienzeiger, wodurch die nur eine getrennte Zeitlinienbezugszeigerdatei einen beliebigen Zugriff auf die mehreren Datenkanäle in Bezug auf eine gemeinsame Zeitlinie unabhängig von dem speziellen Format der entsprechenden Datendateien ermöglicht.

2. Verfahren nach Anspruch 1, wobei die Daten gemäß dem ARINC 429 Standard bereitgestellt werden.

3. Verfahren nach Anspruch 1, ferner mit dem Schritt:

vor dem Schritt c),
Empfangen einer Eingabe von einem Benutzer bezüglich einer Verschiebung des Zeitlinien-Icons auf der GUI-Anzeigeeinrichtung.

4. Verfahren nach Anspruch 1, wobei der Schritt a) ferner die Schritte aufweist:

a1) Eingeben von Daten aus mehreren Datenkanälen; und
a2) Speichern der entsprechenden Daten aus den mehreren Datenkanälen in entsprechenden Datendateien mit ungleichen Datenformaten.

5. Verfahren nach Anspruch 4, wobei die entsprechenden Datendateien in einem Dateiordner gespeichert werden, der Datums- und Zeitinformation für den Zugriff auf den Dateiordner enthält.

6. Verfahren nach Anspruch 4, wobei der Schritt b) den Schritt aufweist:

b1) Speichern der Zeitlinienzeiger in nur einer getrennten Zeitlinienbezugszeigerdatei, wobei die entsprechenden Datendateien und die nur eine getrennte Zeitlinienbezugszeigerdatei in einem Dateiordner gespeichert werden, der Datums- und Zeitinformation für den Zugriff auf den Dateiordner enthält.

7. Verfahren nach Anspruch 6, wobei der Schritt d) die Schritte aufweist:

d1) Ermitteln einer Zeitverschiebung von einem Beginn einer Datensammlungssitzung an;
d2) Unterteilen der Zeitverschiebung durch eine Zeitlinienverschiebungs-Dateiperiode, um einen Index zu einer in einem Speicher gespeicherten nur einen getrennten Zeitlinienbezugszeigerdatei zu finden; und
d3) Öffnen der nur einen getrennten Zeitlinienbezugszeigerdatei und Suchen nach einer der Zeitverschiebung entsprechenden Zeitlinienaufzeichnung; und
d4) Lesen von entsprechenden Zeitmarkierungsindizes aus der einen getrennten Zeitlinienbezugszeigerdatei auf der Basis der Zeitlinienaufzeichnung; und
d5) Öffnen jeder entsprechenden Kanaldatei und Suchen nach darin gespeicherten Datenblöcken; und
d6) sequentielles Auslesen von Daten aus jeder entsprechenden Kanaldatei, die an einem dem Zeitmarkierungsindizes entsprechenden Zeitpunkt beginnen.

8. Verfahren nach Anspruch 1, wobei der Schritt a) aufweist:

a1) Empfangen einer Datenprobe aus wenigstens einem Datenkanal von mehreren Datenkanälen;
a2) Schreiben der Datenprobe in eine in einem Dateiordner gespeicherte entsprechende Datendatei;
a3) Aktualisieren eines Dateizeigers in einer in dem Dateiordner gespeicherten nur einen getrennten Zeitlinienbezugszeigerdatei, wobei der Zeiger einen Zeitpunkt anzeigt, an welchem die entsprechende Datenprobe empfangen wurde.

9. System zum Aufzeichnen und Wiedergeben von Avionikdaten, aufweisend:

eine Speichereinheit, die dafür eingerichtet ist, von aus mehreren Datenkanälen empfangene Daten in entsprechenden Datendateien mit unterschiedlichen Datenformaten zu speichern, wobei die Speichereinheit auch dafür eingerichtet ist, Zeitlinienzeiger in nur einer getrennten Zeitlinienbezugszeigerdatei zu speichern, wobei die Zeitlinienzeiger anzeigen, wann die Daten aus den entsprechenden mehreren Datendateien gespeichert wurden, wobei die nur eine getrennte Zeitlinienbezugszeigerdatei dadurch einen zeitbasierenden Index für die mehreren Datenkanäle bereitstellt;

eine Bestimmungseinheit, die dafür eingerichtet ist, eine spezielle Position eines auf einer grafischen Benutzerschnittstellen-(GUI)-Anzeigeeinrichtung bereitgestellten Zeitlinien-Icons zu bestimmen, wobei das Zeitlinien-Icon einen Zeitpunkt anzeigt, an dem ein Benutzer in der Speichereinheit gespeicherte Daten betrachten möchte; und

eine Wiedergabeeinheit, die dafür eingerichtet ist, auf gespeicherte Daten auf der Basis der speziellen Position des Zeitlinien-Icons in Bezug auf entsprechende Werte der in der Speichereinheit gespeicherten Zeitlinienzeiger zuzugreifen und wiederzugeben, wodurch die nur eine getrennte Zeitlinienbezugszeigerdatei einen beliebigen Zugriff auf die mehreren Datenkanäle in Bezug auf eine gemeinsame Zeitlinie unabhängig von dem speziellen Format der entsprechenden Datendateien ermöglicht.

10. System nach Anspruch 9, wobei die Daten gemäß dem ARINC 429 Standard bereitgestellt werden.

11. System nach Anspruch 9, ferner aufweisend:

eine Eingabeeinheit, die zur Eingabe von Daten eingerichtet ist, die eine Verschiebung des Zeitlinien-Icons auf der GUI-Anzeigeeinrichtung durch den Benutzer darstellen.

12. System nach Anspruch 9, wobei die Speichereinrichtung dafür eingerichtet ist, Daten aus mehreren Datenkanälen zu empfangen, und
wobei die Speichereinrichtung dafür eingerichtet ist, die entsprechenden Daten aus den mehreren Datenkanälen in entsprechenden Datendateien mit unterschiedlichen Datenformaten zu speichern.

13. System nach Anspruch 12, das ferner ein Dateiverzeichnis aufweist, das wenigstens einen Dateiordner enthält.
wobei die entsprechenden Datendateien in dem wenigstens einen Dateiordner gespeichert sind, der die Datums- und Zeitinformation für den Zugriff auf den Dateiordner enthält.

14. System nach Anspruch 13, wobei das Dateiverzeichnis ferner aufweist:

nur eine getrennte Zeitlinienbezugszeigerdatei, die zum Speichern der Zeitlinienzeiger eingerichtet ist;
wobei die entsprechenden Datendateien und die nur eine getrennte Zeitlinienbezugszeigerdatei in dem wenigstens einen Dateiordner gespeichert sind.

15. Computerlesbarer Speicher mit einer Datenstruktur-Implementationsfähigkeit zum Aufzeichnen und Wiedergeben von Avionikdaten, aufweisend:

Mittel zum Speichern von aus mehreren Datenkanälen empfangenen Daten in entsprechenden Datendateien mit unterschiedlichen Datenformaten;
Mittel zum Speichern von Zeitlinienzeigern in nur einer getrennten Zeitlinienbezugszeigerdatei, wobei die Zeitlinienzeiger anzeigen, wann die Daten aus den entsprechenden mehreren Datendateien gespeichert wurden, wobei die nur eine getrennte Zeitlinienbezugszeigerdatei dadurch einen zeitbasierenden Index für die mehreren Datenkanäle bereitstellt;
Mittel zum Bestimmen einer speziellen Position eines auf einer grafischen Benutzerschnittstellen-(GUI)-Anzeigeeinrichtung bereitgestellten Zeitlinien-Icons, wobei das Zeitlinien-Icon einen Zeitpunkt anzeigt, an dem ein Benutzer von den Datenspeichermitteln gespeicherte Avionikdaten betrachten möchte; und
Mittel zum Zugreifen auf und Wiedergeben von gespeicherten Daten auf der Basis der speziellen Position des Zeitlinien-Icons in Bezug auf entsprechende Werte der in den Zeitlinienzeigerspeichermitteln gespeicherten Zeitlinienzeiger, wodurch die nur eine getrennte Zeitlinienbezugszeigerdatei einen beliebigen Zugriff auf die mehreren Datenkanäle in Bezug auf eine gemeinsame Zeitlinie unabhängig von dem speziellen Format der entsprechenden Datendateien ermöglicht.

16. Computerlesbarer Speicher nach Anspruch 15, wobei die Daten gemäß dem ARINC 429 Standard bereitgestellt werden.

**17.** Computerlesbarer Speicher nach Anspruch 15, ferner aufweisend:

Mittel zum Empfangen einer Eingabe von dem Benutzer bezüglich einer Verschiebung des Zeitlinien-Icons auf der GUI-Anzeigeeinrichtung.

**18.** Computerlesbarer Speicher nach Anspruch 15, wobei die Datenspeichermittel ferner aufweisen:

Mittel zum Eingeben von Daten aus mehreren Datenkanälen; und
Mittel zum Speichern der entsprechenden Daten aus den mehreren Datenkanälen in entsprechenden Datendateien mit ungleichen Datenformaten.

**19.** Computerlesbarer Speicher nach Anspruch 18, wobei die entsprechenden Datendateien in einem Dateiordner gespeichert werden, der Datums- und Zeitinformation für den Zugriff auf den Dateiordner enthält.

**20.** Computerlesbarer Speicher nach Anspruch 18, wobei die Zeitlinienzeigerspeichermittel aufweisen:

Mittel zum Speichern der Zeitlinienzeiger in nur einer getrennten Zeitlinienbezugszeigerdatei,
wobei die entsprechenden Datendateien und die nur eine getrennte Zeitlinienbezugszeigerdatei in einem Dateiordner gespeichert werden, der Datums- und Zeitinformation für den Zugriff auf den Dateiordner enthält.


**Revendications**

**1.** Procédé d'enregistrement à accès aléatoire pour enregistrer et lire des données d'avionique, comportant :

a) le stockage, dans des fichiers de données respectifs à formats de données dissemblables, de données reçues d'une pluralité de canaux de données ;
b) le stockage de pointeurs temporels dans un unique fichier séparé de pointeurs à référencement temporel, les pointeurs temporels indiquant l'instant où les données issues de la pluralité respective de fichiers de données ont été stockées, l'unique fichier séparé de pointeurs à référencement temporel fournissant de ce fait un indice temporel pour la pluralité de canaux de données ;
c) la détermination d'une position particulière d'une icône temporelle présentée sur un écran d'affichage utilisateur graphique (GUI), l'icône temporelle indiquant un instant auquel un utilisateur désire examiner des données d'avionique stockées lors de l'étape a) ; et
d) l'accès aux données stockées et leur lecture en fonction de la position particulière de l'icône temporelle par rapport à des valeurs correspondantes des pointeurs temporels stockés lors de l'étape b), grâce à quoi l'unique fichier séparé de pointeurs à référencement temporel permet un accès aléatoire à la pluralité de canaux de données par rapport à une chronologie commune indépendante du format particulier des fichiers de données respectifs.

**2.** Procédé selon la revendication 1, dans lequel les données sont fournies suivant la norme ARINC 429.

**3.** Procédé selon la revendication 1, comportant en outre :

avant l'étape c),
la réception d'un déplacement, saisi par l'utilisateur, de l'icône temporelle sur l'écran GUI.

**4.** Procédé selon la revendication 1, dans lequel l'étape a) comprend en outre :

a1) la saisie de données issues d'une pluralité de canaux de données ; et
a2) le stockage, dans des fichiers de données respectifs à formats de données dissemblables, des données respectives issues de la pluralité de canaux de données.

**5.** Procédé selon la revendication 4, dans lequel les fichiers de données respectifs sont stockés dans un dossier de fichiers qui contient des informations de dates et d'heures pour l'accès au fichier de données.

**6.** Procédé selon la revendication 4, dans lequel l'étape b) comprend :

b1) le stockage des pointeurs temporels dans un unique fichier séparé de pointeurs à référencement temporel, les fichiers de données respectifs et l'unique fichier séparé de pointeurs à référencement temporel étant stockés dans un dossier de fichiers qui contient des informations de dates et d'heures pour l'accès au dossier de fichiers.

**7.** Procédé selon la revendication 6, dans lequel l'étape d) comprend :

d1) la détermination d'un décalage temporel par rapport à un début d'une session de collecte de données ;
d2) la division du décalage temporel par une période de fichier de décalage temporel pour trouver un indice par rapport à un unique fichier séparé de pointeurs à référencement temporel stocké dans une mémoire ; et
d3) l'ouverture de l'unique fichier séparé de pointeurs à référencement temporel et la recherche de l'enregistrement d'une chronologie correspondant au décalage temporel : et
d4) l'extraction, d'après l'enregistrement temporel, d'indices de temps de latence respectifs dans l'unique fichier séparé de pointeurs à référencement temporel fichier; et
d5) l'ouverture de chaque fichier de canal respectif et la recherche de blocs de données stockés dans celui-ci ; et
d6) l'extraction successive de données de chaque fichier de canal respectif possédant des données, en commençant à un instant correspondant aux indices de temps de latence.

**8.** Procédé selon la revendication 1, dans lequel l'étape a) comprend :

a1) la réception d'un échantillon de données provenant d'au moins un canal de données parmi une pluralité de canaux de données ;
a2) l'écriture de l'échantillon de données dans un fichier de données correspondant stocké dans un dossier de fichiers ;
a3) la mise à jour d'un pointeur de fichier dans un unique fichier séparé de pointeurs à référencement temporel, le pointeur indiquant un instant auquel a été reçu l'échantillon de données correspondant.

**9.** Système pour enregistrer et lire des données d'avionique, comportant :

une unité de stockage conçue pour stocker, dans des fichiers de données respectifs à formats de données dissemblables, des données reçues d'une pluralité de canaux de données, l'unité de stockage étant également conçue pour stocker des pointeurs temporels dans un unique fichier séparé de pointeurs à référencement temporel, les pointeurs temporels indiquant l'instant où les données issues de la pluralité respective de fichiers de données ont été stockées, l'unique fichier séparé de pointeurs à référencement temporel fournissant de ce fait un indice temporel pour la pluralité de canaux de données ;
une unité de détermination conçue pour déterminer une position particulière d'une icône temporelle présentée sur un écran d'affichage utilisateur graphique (GUI), l'icône temporelle indiquant un instant auquel un utilisateur désire examiner des données d'avionique stockées dans l'unité de stockage ; et
une unité de lecture conçue pour l'accès aux données stockées et leur lecture en fonction de la position particulière de l'icône temporelle par rapport à des valeurs correspondantes des pointeurs temporels stockés dans l'unité de stockage, grâce à quoi l'unique fichier séparé de pointeurs à référencement temporel permet un accès aléatoire à la pluralité de canaux de données par rapport à une chronologie commune indépendante du format particulier des fichiers de données respectifs.

**10.** Système selon la revendication 9, dans lequel les données sont fournies suivant la norme ARINC 429.

**11.** Système selon la revendication 9, comportant en outre :

une unité de saisie conçue pour saisir des données qui représentent un déplacement d'une icône temporelle sur l'écran GUI par l'utilisateur.

**12.** Système selon la revendication 9, dans lequel l'unité de stockage est conçue pour recevoir des données d'une pluralité de canaux de données, et
dans lequel l'unité de stockage est conçue pour stocker, dans des fichiers de données respectifs à formats de données dissemblables, les données respectives issues de canaux de données.

**13.** Système selon la revendication 12, comportant en outre un répertoire de fichiers qui contient au moins un dossier de fichiers,
les fichiers de données respectifs étant stockés dans le/les dossier(s) de fichiers contenant des informations de dates et d'heures pour l'accès au dossier de fichiers.

14. Système selon la revendication 13, dans lequel le répertoire de fichiers contient en outre :

un unique fichier séparé de pointeurs à référencement temporel conçu pour stocker les pointeurs temporels, les fichiers de données respectifs et le fichier de pointeurs étant stockés le le/les dossier(s) de fichiers.

15. Mémoire lisible par ordinateur ayant une capacité de mise en oeuvre de structure de données pour l'enregistrement et la lecture de données d'avionique, comportant :

un moyen pour stocker, dans des fichiers de données respectifs à formats de données dissemblables, des données reçues d'une pluralité de canaux de données ;
un moyen pour stocker des pointeurs temporels dans un unique fichier séparé de pointeurs à référencement temporel, les pointeurs temporels indiquant l'instant où les données issues de la pluralité respective de fichiers de données ont été stockées, l'unique fichier séparé de pointeurs à référencement temporel fournissant de ce fait un indice temporel pour la pluralité de canaux de données ;
un moyen pour déterminer une position particulière d'une icône temporelle présentée sur un écran d'affichage utilisateur graphique (GUI), l'icône temporelle indiquant un instant auquel un utilisateur désire examiner des données d'avionique stockées dans l'unité de stockage ; et
un moyen pour l'accès aux données stockées et leur lecture en fonction de la position particulière de l'icône temporelle par rapport à des valeurs correspondantes des pointeurs temporels stockés dans l'unité de stockage, grâce à quoi l'unique fichier séparé de pointeurs à référencement temporel permet un accès aléatoire à la pluralité de canaux de données par rapport à une chronologie commune indépendante du format particulier des fichiers de données respectifs.

16. Mémoire lisible par ordinateur selon la revendication 15, dans laquelle les données sont fournies suivant la norme ARINC 429.

17. Mémoire lisible par ordinateur selon la revendication 15, comportant en outre :

un moyen pour saisir des données qui représentent un déplacement d'une icône temporelle sur l'écran GUI par l'utilisateur.

18. Mémoire lisible par ordinateur selon la revendication 15, dans laquelle le moyen de stockage de données comporte en outre :

un moyen pour saisir des données provenant d'une pluralité de canaux de données ; et
un moyen pour stocker, dans des fichiers de données respectifs à formats de données dissemblables, des données reçues d'une pluralité de canaux de données.

19. Mémoire lisible par ordinateur selon la revendication 18, dans laquelle les fichiers de données respectifs à formats de données dissemblables sont stockés dans un dossier de fichiers contenant des informations de dates et d'heures pour l'accès au dossier de fichiers.

20. Mémoire lisible par ordinateur selon la revendication 18, dans laquelle le moyen de stockage de pointeurs temporels comprend :

un moyen pour stocker les pointeurs temporels dans l'unique fichier séparé de pointeurs à référencement temporel,
les fichiers de données respects et l'unique fichier séparé de pointeurs à référencement temporel étant stockés dans un dossier de fichiers qui contient des informations de dates et d'heures pour l'accès au dossier de fichiers.

09261999_172430

Ch1.dat

Ch3.dat

Ch2.dat

header.dat

time.dat

FIG. 1

12:00 HOURS

15:00 HOURS

t0

t1

CHANNEL 1 DATA
CHANNEL 3 DATA
CHANNEL 13 DATA

FIG. 2

MULTIPLE NON-UNIFORM DATA SAMPLING PROCESSES
340

UNIFORM TIME BASE FILE POINTER STORAGE
305

HAS INTERVAL PASSED

HAS A DATA SAMPLE ARRIVED?

310
NO — ?

350
NO — ?

YES

DATA FILES
365

DISK

WRITE SAMPLE TO FILE

360

320
RETRIEVE SAMPLE PROCESS FILE POINTERS

POINTER STORAGE

UPDATE FILE POINTER STORAGE

WRITE MULTIPLE SAMPLE FILE POINTERS TO TIMELINE FILE

DISK

315

370

330

325
TIMELINE FILE

DONE? NO

380

NO — DONE?

END — 390

END — 335

FIG. 3

415

410

USER INTERFACE TIMELINE POINTER

READ TIMELINE POINTER ──420

FROM TIMELINE POINTER, UNIFORM INTERVAL AND DATA POINTER SIZE COMPUTE OFFSET INTO TIMELINE FILE ──430

440── SEEK TO OFFSET IN TIMELINE FILE RETRIEVE FILE POINTERS FOR MULTIPLE DATA FILES ──◄── DISK ──325 TIMELINE FILE

450── FOR INDIVIDUAL DATA FILES SEEK AND READ DATA BLOCK TRANSFER DATA TO PROCESSING ──◄── DISK

365 DATA FILES

460── HAS TIMELINE POINTER MOVED?

YES

? ──460

NO

470── UPDATE FILE POINTERS FOR LAST READ OPERATION - PROCEED TO SEQUENCE TO NEXT DATA FILE

DONE? ──NO

──480

490── END

FIG. 4

FIG. 5

EP 1 769 465 B1

FIG. 6

**EP 1 769 465 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6366311 B1